(19) Europäisches Patentamt
European Patent Office
Office européen des brevets

(11) **EP 1 815 290 B1**

(12) **EUROPÄISCHE PATENTSCHRIFT**

(45) Veröffentlichungstag und Bekanntmachung des Hinweises auf die Patenterteilung:
**03.11.2010   Patentblatt 2010/44**

(51) Int Cl.:
*G02C 13/00* (2006.01)      *G02C 7/02* (2006.01)

(21) Anmeldenummer: 05786091.8

(22) Anmeldetag: **29.09.2005**

(86) Internationale Anmeldenummer:
**PCT/EP2005/010550**

(87) Internationale Veröffentlichungsnummer:
**WO 2006/056261 (01.06.2006 Gazette 2006/22)**

(54) **VERFAHREN, VORRICHTUNG, UND COMPUTERPROGRAMMPRODUKT ZUM FERTIGEN EINES BRILLENGLASES**

METHOD, DEVICE AND COMPUTER PROGRAM PRODUCT FOR THE PRODUCTION OF AN EYEGLASS LENS

PROCEDE, DISPOSITIF ET PRODUIT PROGRAMME D'ORDINATEUR DESTINES A LA PRODUCTION DE VERRES DE LUNETTES

(84) Benannte Vertragsstaaten:
**DE ES FR GB IT**

(30) Priorität: **19.11.2004   DE 102004056008
09.12.2004   DE 102004059448**

(43) Veröffentlichungstag der Anmeldung:
**08.08.2007   Patentblatt 2007/32**

(73) Patentinhaber: **Rodenstock GmbH
80469 München (DE)**

(72) Erfinder:
• **WELK, Andrea
81547 München (DE)**
• **ALTHEIMER, Helmut
87650 Baisweil-Lauchdorf (DE)**

(74) Vertreter: **Müller-Boré & Partner
Patentanwälte
Grafinger Straße 2
81671 München (DE)**

(56) Entgegenhaltungen:
**US-A1- 2003 169 397      US-B1- 6 637 880**

**Beschreibung**

Die vorliegende Erfindung betrifft ein Verfahren, insbesondere zum Bestimmen eines horizontalen Kippwinkels eines Brillenglases, eine Vorrichtung zum Durchführen des Verfahrens sowie ein entsprechendes Computerprogrammprodukt.

Immer stärker wird der Ruf nach optimalen Brillen für den Sport. Insbesondere ist eine auf die jeweils neueste Trendsportart abgestimmte optimale optische Versorgung ein Thema in den entsprechenden Augenoptik- und Sport-Fachzeitschriften. Gutes Sehen im Sport ist nicht nur in Bezug auf die Sicherheit, sondern auch im Hinblick auf die sportliche Leistungsfähigkeit sehr wichtig. Vielfach wird eine Fehlsichtigkeit durch Verwendung von Kontaktlinsen korrigiert. Nicht jeder fehlsichtige Sportler hat jedoch die Möglichkeit, seinen Sehfehler mit Kontaktlinsen zu korrigieren. Probleme mit der Verträglichkeit der Kontaktlinsen oder der teilweise eingeschränkten Möglichkeit der Korrektion stellen oft ein Hindernis dar und machen den Einsatz einer Brille mit entsprechender optischer Korrektion unumgänglich.

Besonders bei sehr dynamischen Sportarten, die schnelle Reaktionen erfordern, ist gutes Sehen oft der ausschlaggebende Parameter für gute sportliche Leistungen. Dazu kommt, daß bei vielen Sportarten, wie z.B. beim Skifahren oder Radfahren, hohe Geschwindigkeiten auch spezielle Anforderungen an die Brillenfassung stellen. Diese soll eine möglichst optimale Kombination aus Rundumsicht, d.h. Sehen/Wahrnehmung auch beim Blick zur Seite hin, und Schutzfunktion gegen Wind darstellen.

Aus diesen Anforderungen resultieren oft sehr große Scheibenformen. Insbesondere weisen Brillen, welche bei sportlichen Aktivitäten getragen werden, in der Regel Brillenfassungen auf, welche derart gebogen sind, daß sie möglichst an die Kopf- bzw. Gesichtsform des Trägers angepaßt sind. Die Anpassung an die Kopfform wird in der Regel durch einen großen Fassungsscheibenwinkel erreicht. Der Fassungsscheibenwinkel ist in der Regel der Winkel, mit welchem das Brillenglas, in Draufsicht, gegen die Brücke der Brillenfassung geneigt ist. Bei normalen Korrektionsfassungen beträgt der Fassungsscheibenwinkel gewöhnlich weniger als 6°. Von diversen Glasherstellern werden bereits Brillengläser für die Verwendung in durchgebogenen Brillenfassungen, d.h. Brillenfassungen mit großem Fassungsscheibenwinkel, angeboten, wobei jedoch die Brillengläser in der Regel für herkömmliche Brillenfassungen, d.h. Brillenfassungen, welche nicht so stark gebogen sind wie Brillenfassungen von Sportbrillen, berechnet und optimiert sind.

Hohe Fassungsscheibenwinkel, insbesondere bei Sportbrillen, resultieren in veränderten optischen Eigenschaften des Brillenglases in Gebrauchsstellung. Brillengläser, welche eine optimale optische Korrektion für den Fehlsichtigen darstellen, müssen daher gesondert berechnet werden. Der hohe Fassungscheibenwinkel des Glases durch die durchgebogene Fassung vor dem Auge muß bereits bei der Berechnung der Brillenglasfläche berücksichtigt werden, um auftretende parasitäre optische Eigenschaften, wie beispielsweise astigmatische Fehler und/oder prismatische Fehler in dem Brillenglas zu korrigieren. Ferner weisen Sportbrillen mit hohem Fassungsscheibenwinkel auch hohe Basiskurven auf, d.h. Basiskurven mit Werten größer 7, welche entsprechend berücksichtigt werden müssen.

In der Regel muß beispielsweise ein Augenoptiker durch die Verarbeitung von Probegläsern herausfinden, welche Abweichung vom angegebenen Augenabstand er aufgrund des hohen Fassungsscheibenwinkels beim Einschleifen vorhalten muß, um in Bezug auf die Zentrierung, d.h. in Bezug auf die Lage des Zentrierpunktes vor dem Auge, ein korrektes Ergebnis zu erzielen. Ein Augenoptiker verbraucht daher in der Regel mehrere Brillengläser, bis das Brillenglas derart in der Brillenfassung angeordnet ist, daß der Zentrierpunkt und der Bezugspunkt zusammenfallen. Brillengläser, welche nicht korrekt zentriert sind, können in der Regel nicht wieder benutzt werden. Ferner spielt die Erfahrung, welche ein Augenoptiker hinsichtlich der Fertigung von Sportbrillen hat, eine große Rolle, um beispielsweise die Anzahl der Probebrillengläser möglichst gering zu halten.

US 2003/169397 A1 offenbart eine Brille mit Brillengläsern, die unter einem pantoskopischen Winkel und einer sogenannten "lateralen Durchbiegung" ("lateral wrap") in einer Brillenfassung angeordnet sind, wobei parasitäre optische Eigenschaften, die aufgrund der Anordnung der Brillengläser entstehen, minimiert werden sollen.

Es ist Aufgabe der Erfindung, eine optimierte, fehlerkorrigierte Bestimmung eines Brillenglases zu ermöglichen und/oder eine optimierte, fehlerkorrigierte Brille bereitzustellen.

Diese Aufgabe wird durch die unabhängigen Ansprüche gelöst. Bevorzugte Ausführungsformen sind Gegenstand der abhängigen Ansprüche.

Gemäß einem Aspekt der Erfindung umfaßt ein erfindungsgemäßes Verfahren die Schritte:

-   Vorgeben einer Brückenweite, einer Scheibenlänge und eines Fassungsscheibenwinkels als Brillenfassungsdaten;

-   Vorgeben einer Basiskurve sowie einer nasalen und temporalen Facettenlage als Brillenglasdaten;

-   Vorgeben einer Pupillendistanz des Benutzers als Benutzerdaten;

-   Berechnen eines horizontalen Kippwinkels des Brillenglases basierend auf den Brillenfassungsdaten, Brillenglasdaten und Benutzerdaten in

Gebrauchsstellung an einem Bezugspunkt oder Entnehmen eines berechneten horizontalen Kippwinkels des Brillenglases aus einer Datenbank basierend auf den Brillenfassungsdaten, Brillenglasdaten und Benutzerdaten in Gebrauchstellung an einem Bezugspunkt oder basierend auf Näherungswerten der Brillenfassungsdaten, Brillenglasdaten und Benutzerdaten in Gebrauchsstellung an einem Bezugspunkt, wobei

-- der Bezugspunkt der Schnittpunkt des augenseitigen horizontalen Hauptstrahls bei Nullblickrichtung des Benutzers mit der objektseitigen Fläche des Brillenglases ist;

-- der horizontale Kippwinkel der Winkel ist, welcher von einer horizontalen Tangente der objektseitigen Fläche des Brillenglases in den Bezugspunkt mit einer horizontalen Referenzgeraden eingeschlossen wird und

-- die horizontale Referenzgerade in einer Ebene liegt, welche senkrecht zu dem horizontalen Hauptstrahl in Nullblickrichtung des Benutzers ist.

Die Begriffe Brillenfassungs-, Brillenglas- und Benutzerdaten sind hierbei nicht abschließend zu verstehen, so daß zusätzlich zu den jeweils angegebenen Daten auch weitere Brillenfassungs-, Brillenglas- und Benutzerdaten vorgebbar sind. Beispielsweise können weiterhin ein Abstand der Mitte der nasalen Facette von der objektseitigen Fläche des Brillenglases, bzw. dem Rand der objektseitgen Fläche des Brillenglases auf der nasalen Seite, und/oder ein Abstand der Mitte der temporalen Facette von der objektseitigen Fläche, bzw. dem Rand der objektseitgen Fläche 14 auf der temporalen Seite als Brillenfassungsdaten vorgegeben werden. Vorzugsweise werden die Brillenfassungs-, Brillenglas- und Benutzerdaten zur Bestimmung des horizontalen Kippwinkels gemessen. Diese Daten können jedoch auch nach einmaligem Messen in einer Datenbank gespeichert und gegebenenfalls zumindest teilweise der Datenbank entnommen werden, ohne daß zur Bestimmung des horizontalen Kippwinkels alle diese Daten wieder neu gemessen werden müssen.

Vorzugsweise wird der Kippwinkel aus den Brillenfassungsdaten, den Brillenglasdaten und den Benutzerdaten berechnet. Eine solche Berechnung muß jedoch nicht für jeden Benutzer durchgeführt werden. Vielmehr ist es auch möglich, daß eine Vielzahl horizontaler Kippwinkel für eine Vielzahl der obigen Daten berechnet und in einer Datenbank zur Verfügung gestellt wird. Daher kann der horizontale Kippwinkel entsprechend insbesondere den Brillenfassungsdaten, den Brillenglasdaten und den Benutzerdaten der Datenbank entnommen werden. Sollten die tatsächlichen Daten nicht in der Datenbank vorliegen, können beispielsweise Näherungswerte benutzt werden.

Gleichermaßen ist es auch möglich, daß der horizontale Kippwinkel gemessen wird. Hierbei wird beispielsweise ein halbfertiges Brillenglas oder ein Probebrillenglas mit einer bekannten Basiskurve in die Brillenfassung eingeschliffen. Der horizontale Kippwinkel kann mittels eines entsprechenden Winkelmeßgerätes aus der nicht fertigen Brille bestimmt bzw. gemessen werden. Hierbei ist es vorteilhafterweise nicht notwendig, daß das verwendete bzw. halbfertige Brillenglas bereits für einen Benutzer individualisiert wurde. Vielmehr ist es möglich, daß ein eventuell halbfertiges Brillenglas gegebenenfalls für eine Vielzahl von Brillenfassungen zur Messung des Kippwinkels verwendet wird.

Da für die parasitären optischen Eigenschaften, beispielsweise induzierte prismatische und/oder astigmatische Fehler, allein die Schrägstellung des Brillenglases vor dem Auge verantwortlich ist, ermöglicht die genaue Kenntnis des horizontalen Kippwinkels an dem Bezugspunkt eine entsprechende Korrektion der parasitären optischen Eigenschaften durch Bestimmung, insbesondere Berechnung oder Auswahl, eines geeigneten Brillenglases. Wird jedoch lediglich der Fassungsscheibenwinkel berücksichtigt, ist eine Korrektur dieser parasitären optischen Eigenschaften lediglich eingeschränkt möglich, da der Fassungsscheibenwinkel die tatsächliche Verkippung des Brillenglases vor dem Auge nicht richtig wiedergibt.

Der Hauptstrahl im Sinne dieser Erfindung ist die objektseitige Verlängerung der Fixierlinie in Nullblickrichtung, wobei die Fixierlinie die Verbindungsgerade zwischen dem foveal abgebildeten Objektpunkt und der Mitte der Eintrittspupille des Auges ist. Die Fixierlinie fällt mit dem objektseitigen Teil des Hauptstrahls zusammen.

Die Nullblickrichtung im Sinne dieser Erfindung ist eine Blickrichtung waagerecht geradeaus, entlang der parallelen Fixierlinien. Insbesondere ist die Nullblickrichtung eine Richtung in Primärstellung des Auges, d.h. in der Stellung des Auges relativ zum Kopf, aus der Seitenwendungen, Hebungen und Senkungen des Auges ohne Verrollung erfolgen. Die Primärstellung wird näherungsweise bei aufrechter Kopf- und Körperhaltung beim Blick geradeaus in die Ferne eingenommen. In anderen Worten ist die Primärstellung die Stellung eines Auges relativ zum Kopf für den Fall, daß das Auge bei Blickrichtung geradeaus ein Objekt anblickt, das sich in Augenhöhe befindet.

Die zur Beschreibung der Erfindung verwendeten Fachbegriffe sind entsprechend einschlägiger Normen, wie beispielsweise der DIN EN ISO 13666 definiert bzw. entsprechen den Fachbegriffen, wie sie in dem Buch Optik und Technik der Brille von Heinz Diepes und Ralf Blendowske, erschienen 2002 im Verlag optische Fachveröffentlichungen GmbH, Heidelberg, verwendet werden. Die Normen sowie das genannte Buch stellen insoweit einen integralen Offenbarungsbestandteil der vorliegenden Anmeldung dar.

Eine vertikale Richtung im Sinne dieser Erfindung ist eine Richtung, welche senkrecht zu der Nullblickrichtung verläuft und einer Richtung einer ausschließlichen Blicksenkung ohne seitliche Augendrehung entspricht. Bei gerader Kopfhaltung entspricht die vertikale Richtung, wie sie in der Erfindung verwendet wird, regelmäßig der vertikalen Richtung im terrestrischen Bezugsystem. Die vertikale Richtung im Sinne der Erfindung weicht von der vertikalen Richtung des terrestrischen Bezugssystems ab, wenn eine Person beispielsweise den Kopf gegenüber der vertikalen Richtung des terrestrischen Bezugssystem geneigt hält. Die horizontale Richtung im Sinne dieser Erfindung ist eine Richtung, welche sowohl zu der Nullblickrichtung als auch zu der vertikalen Richtung senkrecht ist.

Eine Facette im Sinne der vorliegenden Erfindung entspricht grundsätzlich einer herkömmlichen Facette, d.h. einem Vorsprung an einem Rand des Brillenglases, mittels welcher das Brillenglas in der Brillenfassung befestigt wird. Die Lage der Facette an dem Rand des Brillenglases bestimmt, ob und gegebenenfalls wie weit, die objektseitige Fläche bzw. eine Kante der objektseitigen Fläche des Brillenglases in Nullblickrichtung über die Brillenfassung hinausragt. Vorzugsweise umfaßt das Verfahren der vorliegenden Erfindung die weiteren Schritte:

- Vorgeben der Größen der optischen Fehlsichtigkeit des Benutzers als weitere Benutzerdaten;

- Bestimmen des Brillenglases ausgehend von den vorgegebenen Brillenfassungsdaten, Brillenglasdaten und Benutzerdaten unter Berücksichtigung des horizontalen Blickwinkels.

Vorzugsweise kann das Brillenglas ausgehend von den vorgegebenen Brillenfassungsdaten, Brillenglasdaten und Benutzerdaten berechnet werden. Parasitäre optische Eigenschaften, wie beispielsweise induzierte prismatische und/oder astigmatische Fehler, welche aufgrund des horizontalen Kippwinkels des Brillenglases auftreten, können anhand der Berechnung korrigiert werden. Anstelle einer Berechnung des Brillenglases kann allerdings auch auf bereits berechnete Brillengläser zurückgegriffen werden. Prismatische und/oder astigmatische Fehler werden derart berücksichtigt bzw. korrigiert, daß mittels einer Konkordanztabelle, ausgehend von einem ungekippten Brillenglas ein alternatives Brillenglas verwendet wird. In anderen Worten wird ein alternatives Brillenglas ausgehend von einem Brillenglas, welches ohne Berücksichtigung des horizontalen Kippwinkels gemäß den Brillenfassungsdaten, Brillenglasdaten und Benutzerdaten bestimmt würde, insbesondere berechnet wurde, verwendet. Die Abweichungen der optischen Eigenschaften des alternativen Brillenglases von den optischen Eigenschaften des ursprünglichen Brillenglases entspricht gerade einer Korrektur der parasitären optischen Eigenschaften, welche aufgrund der Anordnung des Brillenglases vor dem Auge, d.h. aufgrund des horizontalen Kippwinkels auftreten.

Gemäß einer weiteren bevorzugten Ausführungsvariante des Verfahrens der vorliegenden Erfindung wird das Brillenglas, welches wie oben beschrieben bestimmt wurde, gefertigt. Besonders bevorzugt wird ausgehend von dem Pupillenabstand des Benutzers ein korrigierter Pupillenabstand, unter Berücksichtigung des horizontalen Kippwinkels, bestimmt, wobei der korrigierte Pupillenabstand zum Einpassen des Brillenglases in eine Brillenfassung verwendbar ist. In anderen Worten wird nicht der tatsächlich Pupillenabstand des Benutzers beim Einschleifen bzw. Randen des Brillenglases berücksichtigt. Vielmehr wird ein korrigierter Pupillenabstand zum Einschleifen bzw. Randen des Brillenglases verwendet. Der korrigierte Pupillenabstand ergibt sich aus dem Pupillenabstand des Benutzers, welcher unter Annahme eines nicht vorhandenen horizontalen Kippwinkels gemessen wird. Das Brillenglas wird daher entsprechend dem korrigierten Pupillenabstand gerandet, wobei der Pupillenabstand des Benutzers eine physische Größe des Benutzers ist und daher unverändert bleibt.

Der korrigierte Pupillenabstand kann aufgrund des Pupillenabstands des Benutzers mittels des horizontalen Kippwinkels berechnet werden. Es ist jedoch auch möglich, daß der korrigierte Pupillenabstand anhand des horizontalen Kippwinkels aus einer Tabelle bzw. Datenbank entnommen wird, wobei die Datenbank eine Vielzahl von korrigierten Pupillenabständen enthält, welche für eine Vielzahl von Wertekombinationen der obigen Parameter berechnet wurde. Falls die Werte der Brillenfassungsdaten, Brillenglasdaten, Benutzerdaten, horizontaler Kippwinkel und Pupillendistanz des Benutzers in der Datenbank nicht vorhanden sind, so können beispielsweise Näherungswerte dafür benutzt werden. Ferner ist es auch möglich, daß in der Datenbank bzw. Tabelle nicht absolute korrigierte Pupillenabstände vorhanden sind, sondern beispielsweise Additions- bzw. Multiplikationsfaktoren, anhand welcher der korrigierte Pupillenabstand aus dem Pupillenabstand des Benutzers bestimmt bzw. berechnet werden kann.

Mittels des genannten erfindungsgemäßen Verfahrens läßt sich der exakte Kippwinkel des Brillenglases vor dem Auge bestimmen, womit exakte Korrekturmaßnahmen der durch die Verkippung induzierten Fehler erst möglich sind. Im Vergleich zu den eingangs genannten herkömmlichen Verfahren ist das genannte erfindungsgemäße Verfahren weniger zeit- und kostenintensiv ist. Während für die Fertigung einer Sportbrille herkömmlicherweise in der Regel eine Vielzahl von Probegläsern in die Brillenfassung eingeschliffen werden, welche, falls

Sie nicht korrekt zentriert sind, in der Regel nicht mehr verwendet werden können, kann auf derartige empirische Einschleifversuche bei der Erfindung regelmäßig verzichtet werden.

Ein Verfahren zum Bestimmen eines Brillenglases, das zum Verständnis der Erfindung hilfreich ist, umfaßt die Schritte:

- Vorgeben einer Brückenweite, einer Scheibenlänge und eines Fassungsscheibenwinkels als Brillenfassungsdaten;

- Vorgeben einer Basiskurve sowie einer nasalen und temporalen Facettenlage als Brillenglasdaten;

- Vorgeben einer Pupillendistanz und Größen der optischen Fehlsichtigkeit des Benutzers als Benutzerdaten;

- Vorgeben eines horizontalen Kippwinkels des Brillenglases in Gebrauchsstellung an einem Bezugspunkt;

- Bestimmen des Brillenglases ausgehend von den vorgegebenen Brillenfassungsdaten, Brillenglasdaten und Benutzerdaten, unter Berücksichtigung des horizontalen Kippwinkels, wobei
  der Bezugspunkt der Schnittpunkt des augenseitigen horizontalen Hauptstrahls bei Nullblickrichtung des Benutzers mit der objektseitigen Fläche des Brillenglases ist;
  der horizontale Kippwinkel der Winkel ist, welcher von einer horizontalen Tangente der objektseitigen Fläche des Brillenglases an dem Bezugspunkt mit einer horizontalen Referenzgeraden eingeschlossen wird und
  die horizontale Referenzgerade in einer Ebene liegt, welche senkrecht zu dem horizontalen Hauptstrahl in Nullblickrichtung des Benutzers ist.

Ein Verfahren zum Bereitstellen einer Brille, das zum Verständnis der Erfindung hilfreich ist, umfaßt die Schritte:

- Vorgeben des Brillenglases, welches ausgehend von den vorgegebenen Brillenfassungsdaten, Brillenglasdaten und Benutzerdaten unter Berücksichtigung eines horizontalen Kippwinkels an einem Bezugspunkt bestimmt wird;

- Einpassen des Brillenglases in eine Brillenfassung anhand eines korrigierten Pupillenabstandes, wobei

  -- der korrigierte Pupillenabstand ausgehend von dem Pupillenabstand des Benutzers unter Berücksichtigung des horizontalen Kippwinkels bestimmt wird,
  -- der Bezugspunkt der Schnittpunkt des augenseitigen horizontalen Hauptstrahls bei Nullblickrichtung des Benutzers mit der objektseitigen Fläche des Brillenglases ist;
  -- der horizontale Kippwinkel der Winkel ist, welcher von einer horizontalen Tangente der objektseitigen Fläche des Brillenglases an dem Bezugspunkt mit einer horizontalen Referenzgeraden eingeschlossen wird und
  -- die horizontale Referenzgerade in einer Ebene liegt, welche senkrecht zu dem horizontalen Hauptstrahl in Nullblickrichtung des Benutzers ist, d.h. welche senkrecht zu einem Hauptstrahl in Primärstellung ist.

Beispielsweise kann der korrigierte Pupillenabstand ausgehend von dem Pupillenabstand des Benutzers zusätzlich unter Berücksichtigung der Basiskurve des Brillenglases bestimmt werden.
Gemäß einem weiteren Aspekt der Erfindung wird eine Vorrichtung bereitgestellt mit:

- einer Brillenfassungsdatenerfassungseinrichtung, welche zum Erfassen einer Brückenweite, einer Scheibenlänge und eines Fassungsscheibenwinkels als Brillenfassungsdaten ausgelegt ist,

- einer Brillenglasdatenerfassungseinrichtung, welche zum Erfassen einer Basiskurve sowie einer nasalen und temporalen Facettenlage als Brillenglasdaten ausgelegt ist;

- einer Benutzerdatenerfassungseinrichtung, welche zum Erfassen einer Pupillendistanz des Benutzers als Benutzerdaten ausgelegt ist;

- einer Kippwinkelbestimmungseinrichtung, welche zum Bestimmen eines horizontalen Kippwinkels des Brillenglases basierend auf den Brillenfassungsdaten, Brillenglasdaten und Benutzerdaten in Gebrauchsstellung an einem Bezugspunkt ausgelegt ist, und/oder welche zum Entnehmen eines berechneten horizontalen Kippwinkels des Brillenglases basierend auf den Brillenfassungsdaten, Brillenglasdaten und Benutzerdaten in Gebrauchsstellung an einem Bezugspunkt und/oder basierend auf Näherungswerten der Brillenfassungsdaten, Brillenglasdaten und Benutzerdaten in Gebrauchsstellung an einem Bezugspunkt aus einer Datenbank ausgelegt ist, wobei
  der Bezugspunkt der Schnittpunkt des augenseitigen horizontalen Hauptstrahls bei Nullblickrichtung des Benutzers mit der objektseitigen Fläche des Brillenglases ist;
  der horizontale Kippwinkel der Winkel ist, weicher von einer horizontalen Tangente der objektseitigen Fläche des Brillenglases an dem Bezugspunkt mit einer horizontalen Referenzgeraden eingeschlossen wird und
  die horizontale Referenzgerade in einer Ebene liegt, welche senkrecht zu dem horizontalen Hauptstrahl in Nullblickrichtung des Benutzers ist.

Vorzugsweise umfaßt eine erfindungsgemäße Vorrichtung eine Brillenglasbestimmungseinrichtung, welche zum Bestimmen des Brillenglases ausgehend von den vorgebenden Brillenfassungsdaten, Brillenglasdaten und Benutzerdaten unter Berücksichtigung des horizontalen Kippwinkels ausgelegt ist, wobei die Benutzerdatenerfassungseinrichtung weiterhin ausgelegt ist, Größen der optischen Fehlsichtigkeit des Benutzers als weitere Benutzerdaten zu erfassen.

Besonders bevorzugt umfaßt eine erfindungsgemäße Vorrichtung eine Brillenglasfertigungseinrichtung, welche ausgelegt ist, das bestimmte Brillenglas zu fertigen.

Weiterhin vorzugsweise umfaßt eine Vorrichtung der vorliegenden Erfindung eine Pupillenabstandskorrektionseinrichtung, welche zum Bestimmen des korrigierten Pupillenabstandes ausgehend von dem Brillenabstand des Benutzers unter Berücksichtigung des horizontalen Kippwinkels ausgelegt ist, wobei der korrigierte Pupillenabstand zum Einpassen des Brillenglases in einer Brillenfassung verwendbar ist.

Besonders bevorzugt umfaßt eine erfindungsgemäße Vorrichtung eine Brillenglaseinpaßeinrichtung, welche zum Einpassen des Brillenglases in eine Brillenfassung anhand des korrigierten Pupillenabstandes ausgelegt ist.

Gemäß einem weiteren Aspekt der vorliegenden Erfindung wird ein Brillenglas bereitgestellt mit

- einer Brückenweite, einer Scheibenlänge und einem Fassungsscheibenwinkel als vorgegebenen Brillenfassungsdaten;

- einer Basiskurve sowie einer nasalen und temporalen Facettenlage als vorgegebenen Brillenglasdaten, wobei

- eine Pupillendistanz und Größen der optischen Fehlsichtigkeit des Benutzers als Benutzerdaten vorgegeben werden,

- ein horizontaler Kippwinkel des Brillenglases in Gebrauchsstellung an einem Bezugspunkt bestimmt bzw. vorgegeben wird und

- das Brillenglas, ausgehend von den vorgegebenen Brillenfassungsdaten, Brillenglasdaten und Benutzerdaten unter Berücksichtigung des horizontalen Kippwinkels bestimmt bzw. gefertigt wird, wobei
der Bezugspunkt der Schnittpunkt des augenseitigen horizontalen Hauptstrahls bei Nullblickrichtung des Benutzers mit der objektseitigen Fläche des Brillenglases ist;
der horizontale Kippwinkel der Winkel ist, welcher von einer horizontalen Tangente der objektseitigen Fläche des Brillenglases an dem Bezugspunkt mit einer horizontalen Referenzgeraden eingeschlossen wird und
die horizontale Referenzgerade in einer Ebene liegt, welche senkrecht zu dem horizontalen Hauptstrahl in Nullblickrichtung des Benutzers ist.

Gemäß einem weiteren Aspekt der vorliegenden Erfindung wird eine Brille bereitgestellt mit

- einer Brückenweite, einher Scheibenlänge und einem Fassungsscheibenwinkel als vorgegebene Brillenfassungsdaten;

- einer Basiskurve sowie einer nasalen und temporalen Facettenlage als vorgegebene Brillenglasdaten;

- einer Pupillendistanz und Größen der optischen Fehlsichtigkeit des Benutzers als vorgegebene Benutzerdaten;

- einem horizontalen Kippwinkel des Brillenglases in Gebrauchsstellung an einem Bezugspunkt, wobei
ein korrigierter Pupillenabstand ausgehend von dem Pupillenabstand des Benutzers unter Berücksichtigung des horizontalen Kippwinkels bestimmt wird;
das Brillenglas in eine Brillenfassung anhand eines korrigierten Pupillenabstandes eingepaßt wird;
der Bezugspunkt der Schnittpunkt des augenseitigen horizontalen Hauptstrahls bei Nullblickrichtung des Benutzers mit der objektseitigen Fläche des Brillenglases ist;
der horizontale Kippwinkel der Winkel ist, welcher von einer horizontalen Tangente der objektseitigen Fläche des Brillenglases an dem Bezugspunkt mit einer horizontalen Referenzgeraden eingeschlossen wird und
die horizontale Referenzgerade in einer Ebene liegt, welche senkrecht zu dem horizontalen Hauptstrahl in Primärstellung des Benutzers ist.

Bevorzugte Ausführungsvarianten bzw. bevorzugte Ausführungsformen der vorliegenden Erfindung werden anhand nachfolgender schematischer Figuren beispielhaft beschrieben. Es zeigt

Fig. 1    eine Frontansicht einer konventionellen Brillenglasanordnung;

Fig. 2    eine schematische Schnittansicht eines bevorzugten Brillenglases gemäß der vorliegenden Erfindung;

Fig. 3    eine schematische Schnittansicht einer bevorzugten Ausführungsform der vorliegenden Erfindung gemäß der Figur 2.

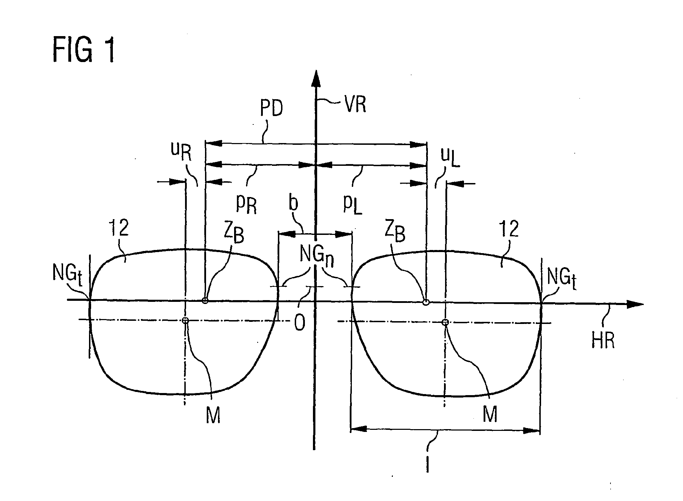

**Figur 1** zeigt eine schematische Ansicht einer herkömmlichen Brillenglasanordnung mit Größen und Bezeichnung, wie sie in einem Kastensystem verwendet werden. Ein herkömmliches Kastensystem ist beispielsweise in der DIN 58208 oder in der DIN EN ISO 13666 beschrieben. In Figur 1 ist ein Einzelpupillenabstand $p_R$ und ein Einzelpupillenabstand $p_L$ dargestellt. Ein Pupillenabstand PD ergibt sich aus der Summe des Einzelpupillenabstandes $p_R$ und des Einzelpupillenabstandes $p_L$. Der Einzelpupillenabstand $p_R$ bzw. $p_L$ entspricht einer Summe aus dem Abstand des Zentrierpunktes ZB von dem nasalen Nutengrund $NG_n$ in der horizontalen Richtung HR und einer halben Brückenweite b.

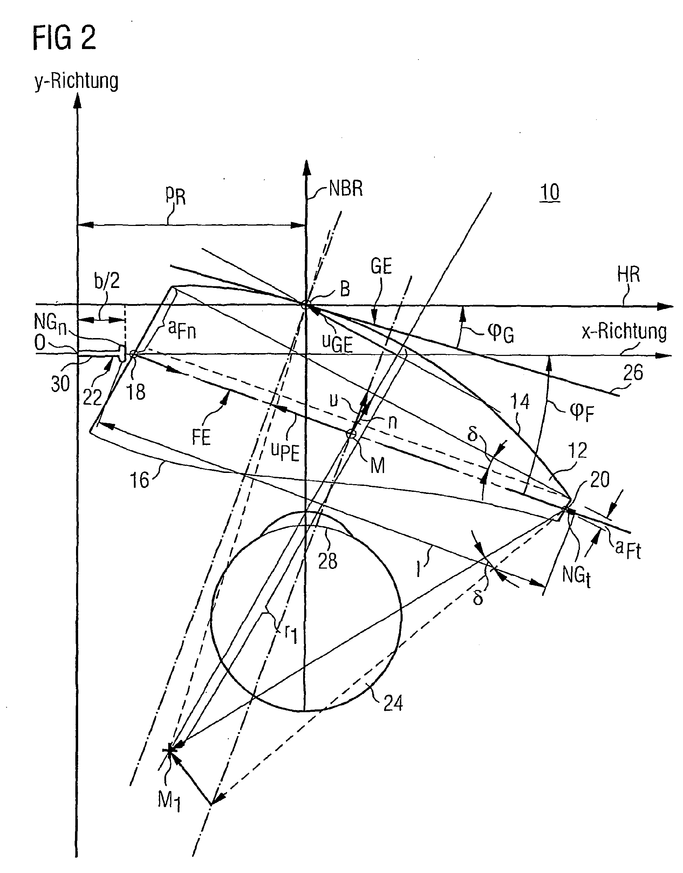

Ferner ist in Figur 1 für jedes Brillenglas 12 (siehe Figur 2) ein temporaler Nutengrund $NG_t$ und ein nasaler Nutengrund $NG_n$ dargestellt. Die Brückenweite b entspricht dem Abstand vom nasalen Nutengrund $NG_n$ zum nasalen Nutengrund $NG_n$ in einer horizontalen Richtung HR. Der gesamte Pupillenabstand PD ergibt sich durch Addition des Einzelpupillenabstandes $p_R$ mit dem Einzelpupillenabstand $p_L$.

Weiterhin ist in Figur 1 für jedes Brillenglas 12 ein Kastenmittelpunkt M gezeigt, wobei der Kastenmittelpunkt M in der horizontalen Richtung HR gleich weit von dem temporalen Nutengrund $NG_t$ und dem nasalen Nutengrund $NG_n$ entfernt ist. Eine Scheibenlänge I des Brillenglases 12 entspricht dem Abstand in horizontaler Richtung HR des temporalen Nutengrundes $NG_t$ von dem nasalen Nutengrund $NG_n$.

Ferner ist der horizontale Abstand des Zentrierpunktes $Z_B$ von dem Kastenmittelpunkt M für jedes Brillenglas 12 gezeigt. Der Abstand ist entsprechend dem rechten oder linken Brillenglas 12 mit $u_R$ bzw. $u_L$ angegeben. Der Abstand des Zentrierpunktes $Z_B$ vom Kastenmittelpunkt M wird als Dezentration $u_R$ bzw. $u_L$ von dem Zentrierpunkt $Z_B$ in horizontaler Richtung HR bezeichnet. Ist die Dezentration $u_R$ bzw. $u_L$ der nasalen Seite zugewandt, so weist sie einen negativen Wert auf. Ist sie der temporalen Seite zugewandt, so weist sie einen positiven Wert auf. Der Zentrierpunkt ZB entspricht dem Bezugspunkt B in Figur 2.

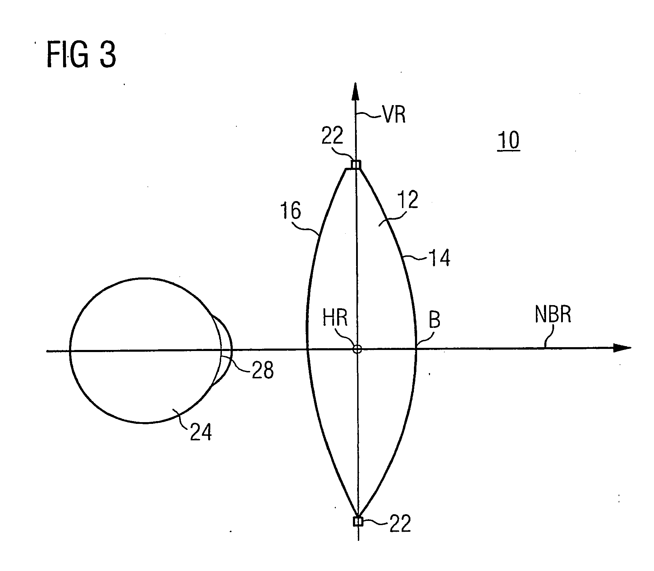

**Figur 2** zeigt eine Vorrichtung 10 gemäß einer bevorzugten Ausführungsform der vorliegenden Erfindung mit einem Brillenglas 12, welches eine objektseitige Fläche 14 und eine augenseitige Fläche 16 aufweist. Das Brillenglas 12 ist mittels einer nasalen Facette 18 und einer temporalen Facette 20 an einer Brillenfassung 22 angeordnet. Eine Fassungsebene FE umfaßt die beiden Facetten 18, 20 und steht senkrecht zu einer Schnittebene, welche durch eine Nullblickrichtung NBR und die Horizontalrichtung HR aufgespannt ist. Die Nullblickrichtung NBR entspricht der Fixierlinie in Primärstellung eines Auges 24 eines Benutzers des Brillenglases 12. Bei der Primärstellung handelt es sich um eine Stellung des Auges 24 relativ zum Kopf (nicht gezeigt) für den Fall, daß bei Blickrichtung geradeaus ein Objekt (nicht gezeigt) angeblickt wird, welches sich in Augenhöhe hinsichtlich einer vertikalen Richtung (siehe Figur 3) befindet. Die Nullblickrichtung NBR schneidet die objektseitige Fläche 14 des Brillenglases 12 an einem Bezugspunkt B. Ferner ist in Figur 2 eine horizontale Tangente 26 der objektseitigen Fläche 14 des Brillenglases 12 an dem Bezugspunkt B gezeigt. Die horizontale Tangente 26 schließt mit der horizontalen Richtung HR einen horizontalen Kippwinkel $\varphi_G$ ein.

In Figur 1 ist außerdem ein Fassungsscheibenwinkel $\varphi_F$ gezeigt, welcher von der Horizontalenrichtung HR und der Fassungsebene FE eingeschlossen wird. Der horizontale Kippwinkel $\varphi_G$ und der Fassungsscheibenwinkel $\varphi_F$ sind in der Regel nicht gleich. Für den horizontalen Kippwinkel $\varphi_G$ gilt:

$$\sin\varphi_G = \frac{p_R - m_{1x}}{r_1} = \frac{(p_R - m_{1x})BK}{525},$$

wobei $m_{1x}$ die Koordinate in einer x-Richtung des Mittelpunkts $M_1$ eines Kreise (nicht gezeigt) ist, auf welchen die sphärische objektseitige Fläche 14 des Brillenglases 12 liegt. Der Parameter $r_1$ ist der Radius des Kreises um $M_1$, d.h. der Krümmungsradius der sphärischen objektseitigen Fläche in Millimeter. Der Parameter BK repräsentiert die Basiskurve in Dioptrie und der Parameter $p_R$ den Wert des Einzelpupillenabstands, d.h. des Abstands des Mittelpunkts einer Pupille 28 des Auges 24 in horizontaler Richtung HR vom Mittelpunkt einer Brücke 30 der Brillenfassung 22.

Zum einfacheren Verständnis wird in der nachfolgenden Beschreibung die x-Richtung parallel zu der horizontalen Richtung HR gewählt und eine y-Richtung parallel zu der Nullblickrichtung NBR, wobei durch die x- und die y-Richtung ein Koordinatensystem bestimmt ist. Der Ursprung O des Koordinatensystems entspricht dem Schnittpunkt einer Geraden in y-Richtung, welche durch den Mittelpunkt der Brücke 30 verläuft und einer Geraden in x-Richtung, welche durch die nasale Facette 18 verläuft.

Für den Kreismittelpunkt $M_1$ der sphärischen objektseitigen Fläche 14 des Brillenglases 12 gilt:

$$M_1 = \begin{pmatrix} m_{1x} \\ m_{1y} \end{pmatrix} = M - (r_1 - t_{Rand} - a_{Ft})u$$

Sind ein Abstand $a_{Fn}$ der Mitte der nasalen Facette 18 von der objektseitigen Fläche 14, bzw. dem Rand der objektseitgen Fläche 14 auf der nasalen Seite, und ein Abstand $a_{Ft}$ der Mitte der temporalen Facette 20 von der objektseitigen Flächen 14, bzw. dem Rand der objektseitgen Fläche 14 auf der temporalen Seite, nicht gleich groß, kann die Orientierung des Brillenglases 12, insbesondere der objektseitigen Fläche 14 des Brillenglases 12, durch eine Drehung um den temporalen Nutengrund $NG_t$ mit dem Drehwinkel $\delta$ beschrieben werden. Es gilt:

$$\tan\delta = \frac{a_{Fn} - a_{Ft}}{l} \Rightarrow \delta = \arctan\frac{a_{Fn} - a_{Ft}}{l},$$

wobei der Vektor $PM_1 = M_1 - P$ um den Winkel $\delta$ gedreht wird, wobei P der Vektor des temporalen Nutengrundes darstellt. Es gilt:

$$M_1 = \begin{pmatrix} m_{1x} \\ m_{1y} \end{pmatrix} = M - (r_1 - t_{Rand} - a_{Ft})u$$

und

$$P = \begin{pmatrix} p_x \\ p_y \end{pmatrix} = \begin{pmatrix} \frac{b}{2} + l\cos\varphi_F \\ -l\sin\varphi_F \end{pmatrix} = \begin{pmatrix} \frac{b}{2} + lu_y \\ -lu_x \end{pmatrix},$$

wobei ferner für den Kastenmittelpunkt M gilt:

$$M = \begin{pmatrix} m_x \\ m_y \end{pmatrix} = \begin{pmatrix} \frac{b}{2} + \frac{l\cos\varphi_F}{2} \\ -\frac{l\sin\varphi_F}{2} \end{pmatrix} = \frac{1}{2}\begin{pmatrix} \frac{b}{2} + lu_y \\ -lu_x \end{pmatrix}.$$

Der Parameter $t_{Rand}$ ist die Scheiteltiefe der Vorderfläche, d.h. der objektseitigen Fläche 14 des Brillenglases 12 am äußeren temoralen Nutengrung $NG_t$, wobei $t_{Rand}$ gegeben ist durch:

$$t_{Rand} = r_1 - r_1\sqrt{1 - 0{,}25\frac{l^2}{r_1^2}}.$$

Somit gilt nach der Drehung für den Mittelpunkt $M_1$ der objektseitigen Fläche 14:

$$M_1 = M + \begin{pmatrix} \cos\delta & \sin\delta \\ -\sin\delta & \cos\delta \end{pmatrix} \Delta r = \begin{pmatrix} m_x + \cos\delta\Delta x + \sin\delta\Delta y \\ m_y - \sin\delta\Delta x + \cos\delta\Delta y \end{pmatrix},$$

wobei für $\Delta r$ gilt:

$$\Delta r = M_1 - P = \begin{pmatrix} \Delta x \\ \Delta y \end{pmatrix} \begin{pmatrix} m_{1x} - p_x \\ m_{1y} - p_y \end{pmatrix}.$$

Für den Bezugspunkt B gilt:

$$B = \begin{pmatrix} m_{1x} + r_1\sin\varphi_G \\ m_{1y} + r_1\cos\varphi_G \end{pmatrix} = \begin{pmatrix} p_R \\ m_{1y} + r_1\cos\varphi_G \end{pmatrix}.$$

Wie aus Figur 2 hervorgeht ergeben sich für den Fassungsscheibenwinkel $\varphi_F$ und den horizontalen Kippwinkel $\varphi_G$ in der Regel verschiedene Werte. Falls die objektseitige Fläche 14 des Brillenglases 12 unter einem Winkel verschieden von 90° zur Nullblickrichtung NBR angeordnet ist, treten parasitäre optische Eigenschaften auf. In anderen Worten treten parasitäre optische Eigenschaften dann auf, wenn der horizontalen Kippwinkel $\varphi_G$ ungleich 0° ist und folglich müssen die parasitären optischen Eigenschaften entsprechend dem horizontalen Kippwinkel $\varphi_G$ korrigiert werden. Eine Korrektur entsprechend dem Fassungsscheibenwinkel $\varphi_F$ führt nur dann zu korrekten Werten, falls der Fassungsscheibenwinkel $\varphi_F$ und der horizontale Kippwinkel $\varphi_G$ identisch sind.

Wird das Brillenglas 12 in einer Fassung 22 angeordnet, muß außerdem eine Korrektur des Pupillenabstandes PD zu Einpaßzwecken durchgeführt werden. Hierbei wird zwischen zwei Verfahren, der horizontalen Dezentration in der Fassungsebene FE und der horizontalen Dezentration in einer Tangentialebene GE des Brillenglases 12, unterschieden. Bei der horizontalen Dezentration in der Fassungsebene FE wird der Abstand des Bezugspunkts B von einer Geraden durch den Kastenmittelpunkt M mit dem Richtungsvektor u bestimmt, wobei gilt:

$$u_{FE} = (b_x - m_x)u_y - (b_y - m_y)u_x.$$

Der Kastenmittelpunkt M entspricht dem oben beschriebenen Kastenmittelpunkt, wobei der Fassungsscheibenwinkel $\varphi_F$ berücksichtigt wird. Ferner ist u der Richtungsvektor senkrecht zu der Fassungsebene FE, wobei gilt:

$$u = \begin{pmatrix} u_x \\ u_y \end{pmatrix} = \begin{pmatrix} \sin\varphi_F \\ \cos\varphi_F \end{pmatrix}.$$

Bei dem Verfahren der horizontalen Dezentration in der Tangentialebene GE des Brillenglases 12 wird der Abstand des Bezugspunktes B von einer Geraden durch den Kastenmittelpunkt M mit Richtüngsvektor n bestimmt, wobei gilt:

$$u_{GE} = (b_x - m_x)n_y - (b_y - m_y)n_x.$$

Für den Richtungsvektor n gilt:

$$n = \frac{M - M_1}{|M - M_1|}.$$

Die Tangentialebene GE ist senkrecht zu der x-y-Ebene. Ferner liegt der Vektor u in der Tangentialebene.

Unter Berücksichtigung des horizontalen Kippwinkels $\varphi_G$ kann ein korrigierter Einzelpupillenabstand $p'_R$ berechnet werden, wobei sich der korrigierte Einzelpupillenabstand $p'_R$ aus dem Wert des Einzelpupillenabstandes $p_R$ ergibt. Es gilt:

$$p'_R = p_R + u_{FE} - u_R$$

oder es gilt

$$p'_R = p_R + u_{GE} - u_R,$$

je nachdem, mit welchem Verfahren die Dezentration berechnet wird. Analog berechnet sich ein korrigierter Einzelpupillenabstand $p'_L$. Ein korrigierter Pupillenabstand ergibt sich aus der Summe des korrigierten Einzelpupillenabstandes $p'_L$ mit dem korrigierten Einzelpupillenabstand $p'_R$.

Bei einem berandeten Brillenglas 12, bei dem die Facette nicht überall parallel zur Vorderfläche verläuft, unterscheiden sich die Werte für $u_{FE}$ und $u_{GE}$. Daher ergeben sich in einem solchen Fall für unterschiedliche Dezentrationsverfahren unterschiedliche Werte für den korrigierten Pupillenabstand $p'_R$ bzw. $p'_L$.

**Figur 3** zeigt eine Schnittansicht einer bevorzugten Ausführungsform der vorliegenden Erfindung entlang einer Ebene, welche durch die Nullblickrichtung NBR und eine Vertikalrichtung VR aufgespannt wird. Die Vertikalrichtung VR verläuft senkrecht zu der Nullblickrichtung NBR und senkrecht zu der horizontalen Richtung HR. Die horizontale Richtung HR verläuft daher senkrecht zu der Zeichenebene der Figur 3.

Tabellen 1 bis 4 zeigen Beispiele des horizontalen Kippwinkels $\varphi_G$ und des korrigierten Pupillenabstands für vorbestimmte Basiskurven und gegebene Werte für den Fassungsscheibenwinkel $\varphi_F$ für zwei unterschiedliche Brillenfassungen, welche mit Fassung 50-16 und Fassung 60-16 bezeichnet wurden, wobei die Brückenweite b, Scheibenlänge I sowie die Lage des nasalen Nutengrundes $NG_n$ und des temporalen Nutengrundes $NG_t$ bekannt sind.

Die vorliegende Erfindung ist nicht auf die oben beschriebenen Ausführungsformen, insbesondere nicht auf die Bestimmung bzw. Vorgabe des horizontalen Kippwinkels beschränkt. Vielmehr kann der Kippwinkel auch in beliebigen anderen Richtungen bestimmt bzw. vorgegeben werden und eine entsprechende optische Korrektur durchgeführt werden. Ferner kann die optische Korrektur auch an einem anderen Punkt als dem Bezugspunkt B berechnet werden. Insbesondere kann die Korrektur für die gesamte augenseitige Fläche 14 berechnet werden.

**Bezugszeichenliste**

| | |
|---|---|
| 10 | Vorrichtung |
| 12 | Brillenglas |
| 14 | objektseitige Fläche |
| 16 | augenseitige Fläche |
| 18 | nasale Facette |
| 20 | temporale Facette |

| | |
|---|---|
| 22 | Brillenfassung |
| 24 | Auge |
| 26 | Tangente |
| 28 | Pupille |
| 30 | Brücke |
| FE | Fassungsebene |
| GE | Tangentialebene |
| NBR | Nullblickrichtung |
| HR | Horizontalrichtung |
| VR | Vertikalrichtung |
| B | Bezugspunkt |
| $\varphi_G$ | horizontaler Kippwinkel |
| $\varphi_F$ | Fassungsscheibenwinkel |
| M | Kastenmittelpunkt |
| $NG_n$ | nasaler Nutengrund |
| $NG_t$ | temporaler Nutengrund |
| PD | gesamter Pupillenabstand |
| $p_R$, $p_L$ | Einzelpupillenabstand |
| $p'_R$, $p'^L$ | korrigierter Einzelpupillenabstand |
| $u_R$, $u_L$ | Dezentration |
| O | Ursprung |

PD und korrigierte PD [mm]

Tabelle 1

| Fassung **50-16** Pupillendistanz **30** | |
|---|---|
| | Basiskurve 8 |
| FSW 5° korrigierte | $\varphi_G$ 2.04° PD29.61 |
| FSW 10° korrigierte | $\varphi_G$ 6.85° PD29.40 |
| FSW 20° korrigierte | $\varphi_G$ 16.91° PD29.46 |

Tabelle 2

| Fassung **50-16** Pupillendstanz **33** | |
|---|---|
| | Basiskurve 8 |
| FSW 5° korrigierte | $\varphi_G$ : 4.67° PD32.62 |
| FSW 10° korrigierte | $\varphi G$ 9.50° PD32.43 |
| FSW 20° korrigierte | $\varphi_G$ 19.67° PD 32.62 |

Tabelle 3

| Fassung **60-16** Pupillendistanz **34** | |
|---|---|
| | Basiskurven 8 |
| FSW 5° | $\varphi_G$ 1.01° |

11

(fortgesetzt)

| Fassung **60-16** Pupillendistanz **34** | |
|---|---|
| | Basiskurven 8 |
| korrigierte | PD33.43 |
| FSW 10° | $\varphi_G$ 5.69° |
| korrigierte | PD33.07 |
| FSW 20° | $\varphi_G$ 15.56° |
| korrigierte | PD32.92 |

Tabelle 4

| Fassung **60-16** Pupillendistanz **38** | |
|---|---|
| | Basiskurve 8 |
| FSW 5° | $\varphi_G$ 4.51° |
| korrigierte | PD37.44 |
| FSW 10° | $\varphi_G$ 9.21° |
| korrigierte | PD37.10 |
| FSW 20° | $\varphi_G$ 19.22° |
| korrigierte | PD 37.10 |
| PD und korrigierte PD [mm] | |

**Patentansprüche**

1. Verfahren mit den Schritten:

   - Vorgeben einer Brückenweite (b), einer Scheibenlänge (I) und eines Fassungsscheibenwinkels ($\varphi_F$) als Brillenfassungsdaten;
   - Vorgeben einer Basiskurve (BK) sowie einer nasalen und temporalen Facettenlage ($a_{Fn}$, $a_{Ft}$) als Brillenglasdaten;
   - Vorgeben einer Pupillendistanz ($p_L$, $p_R$) des Benutzers als Benutzerdaten;
   - Berechnen eines horizontalen Kippwinkels ($\varphi_G$) des Brillenglases (12) basierend auf den Brillenfassungsdaten, Brillenglasdaten und Benutzerdaten in Gebrauchsstellung an einem Bezugspunkt (B) oder Entnehmen eines berechneten horizontalen Kippwinkels ($\varphi_G$) des Brillenglases (12) aus einer Datenbank basierend auf den Brillenfassungsdaten, Brillenglasdaten und Benutzerdaten in Gebrauchsstellung an einem Bezugspunkt (B) oder basierend auf Näherungswerten der Brillenfassungsdaten, Brillenglasdaten und Benutzerdaten in Gebrauchsstellung an einem Bezugspunkt (B), wobei

   der Bezugspunkt (B) der Schnittpunkt des augenseitigen horizontalen Hauptstrahls bei Nullblickrichtung (NBR) des Benutzers mit der objektseitigen Fläche (14) des Brillenglases (12) ist;
   der horizontale Kippwinkel ($\varphi_G$) der Winkel ist, welcher von einer horizontalen Tangente (26) der objektseitigen Fläche (14) des Brillenglases (12) an dem Bezugspunkt (B) mit einer horizontalen Referenzgeraden (HR) eingeschlossen wird und
   die horizontale Referenzgerade (HR) in einer Ebene liegt, welche senkrecht zu dem horizontalen Hauptstrahl in Nullblickrichtung (NBR) des Benutzers ist.

2. Verfahren nach Anspruch 1 mit den weiteren Schritten:

   - Vorgeben der Größen der optischen Fehlsichtigkeit des Benutzers als weitere Benutzerdaten;
   - Bestimmen des Brillenglases (12) ausgehend von den vorgegebenen Brillenfassungsdaten, Brillenglasdaten und Benutzerdaten unter Berücksichtigung des horizontalen Kippwinkels ($\varphi_G$).

3. Verfahren nach Anspruch 2 mit dem weiteren Schritt:

   - Fertigen des bestimmten Brillenglases (12).

4. Verfahren nach Anspruch 2 oder 3, mit dem weiteren Schritt:

   - Bestimmen eines korrigierten Pupillenabstandes ($p'_L$, $p'_R$) ausgehend von dem Pupillenabstand ($p_L$, $p_R$) des Benutzers unter Berücksichtigung des horizontalen Kippwinkels ($\varphi_G$), wobei der korrigierte Pupillenabstand ($p'_L$, $p'_R$) zum Einpassen des Brillenglases (12) in eine Brillenfassung (22) verwendbar ist.

5. Verfahren nach Anspruch 4 mit dem Schritt:

   - Einpassen des Brillenglases (12) in eine Brillenfassung (22) anhand des korrigierten Pupillenabstandes ($p'_L$, $p'_R$).

6. Vorrichtung mit

   - einer Brillenfassungsdatenerfassungseinrichtung, welche zum Erfassen einer Brückenweite (b), einer Scheibenlänge (I) und eines Fassungsscheibenwinkels ($\varphi_F$) als Brillenfassungsdaten ausgelegt ist;
   - einer Brillenglasdatenerfassungseinrichtung, welche zum Erfassen einer Basiskurve (BK) sowie einer nasalen und temporalen Facettenlage ($a_{Fn}$, $a_{Ft}$) als Brillenglasdaten ausgelegt ist;
   - einer Benutzerdatenerfassungseinrichtung, welche zum Erfassen einer Pupillendistanz ($p_L$, $p_R$) des Benutzers als Benutzerdaten ausgelegt ist; - einer Kippwinkelbestimmungseinrichtung, welche zum Berechnen eines horizontalen Kippwinkels ($\varphi_G$) des Brillenglases (12) basierend auf den Brillenfassungsdaten, Brillenglasdaten und Benutzerdaten in Gebrauchsstellung an einem Bezugspunkt (B) ausgelegt ist, und/oder welche zum Entnehmen eines berechneten horizontalen Kippwinkels ($\varphi_G$) des Brillenglases (12) basierend auf den Brillenfassungsdaten, Brillenglasdaten und Benutzerdaten in Gebrauchsstellung an einem Bezugspunkt (B) und/oder basierend auf Näherungswerten der Brillenfassungsdaten, Brillenglasdaten und Benutzerdaten in Gebrauchsstellung an einem Bezugspunkt (B) aus einer Datenbank ausgelegt ist, wobei

   der Bezugspunkt (B) der Schnittpunkt des augenseitigen horizontalen Hauptstrahls bei Nullblickrichtung (NBR) des Benutzers mit der objektseitigen Fläche (14) des Brillenglases (12) ist;
   der horizontale Kippwinkel ($\varphi_G$) der Winkel ist, welcher von einer horizontalen Tangente (26) der objektseitigen Fläche (14) des Brillenglases (12) an dem Bezugspunkt (B) mit einer horizontalen Referenzgeraden (HR) eingeschlossen wird und
   die horizontale Referenzgerade (HR) in einer Ebene liegt, welche senkrecht zu dem horizontalen Hauptstrahl in Nullblickrichtung (NBR) des Benutzers ist.

7. Vorrichtung nach Anspruch 6 mit
   einer Brillenglasbestimmungseinrichtung, welche zum Bestimmen des Brillenglases (12) ausgehend von den vorgegebenen Brillenfassungsdaten, Brillenglasdaten und Benutzerdaten unter Berücksichtigung des horizontalen Kippwinkels ($\varphi_G$) ausgelegt ist, wobei
   die Benutzerdatenerfassungseinrichtung weiterhin ausgelegt ist, Größen der optischen Fehlsichtigkeit des Benutzers als weitere Benutzerdaten zu erfassen.

8. Vorrichtung nach Anspruch 7 mit:

   einer Brillenglasfertigungseinrichtung, welche ausgelegt ist, das bestimmte Brillenglas (12) zu fertigen.

9. Vorrichtung nach Anspruch 7 oder 8 mit
   einer Pupillenabstandskorrektionseinrichtung, welche zum Bestimmen eines korrigierten Pupillenabstandes ($p'_L$, $p'_R$), ausgehend von dem Pupillenabstand (pL, $p_R$) des Benutzers unter Berücksichtigung des horizontalen Kippwinkels ($\varphi_G$) ausgelegt ist, wobei der korrigierte Pupillenabstand ($p'_L$, $p'_R$) zum Einpassen des Brillenglases (12) in eine Brillenfassung (22) verwendbar ist.

10. Vorrichtung nach Anspruch 9 mit
    einer Brillenglaseinpaßeinrichtung, welche zum Einpassen des Brillenglases (12) in eine Brillenfassung (22) anhand des korrigierten Pupillenabstandes ($p'_L$, $p'_R$) ausgelegt ist.

**11.** Computerprogrammprodukt umfassend Programmteile, welche, wenn geladen in einem Computer, zur Durchführung eines Verfahrens nach einem der Ansprüche 1 bis 5 ausgelegt sind.

**Claims**

**1.** Method with the steps:

• presetting a bridge width (b), a lens length (l) and a frame lens angle ($\varphi_F$) as spectacle frame data;
• presetting a base curve (BK) as well as a nasal and temporal bevel position ($a_{Fn1}$ $a_{Ft}$) as spectacle lens data;
• presetting a pupil distance ($p_L$, $p_R$) of the user as user data;
• calculating a horizontal tilt angle ($\varphi_G$) of the spectacle lens (12) based on the spectacle frame data, spectacle lens data and user data in the position of use at a reference point (B), or taking from a data bank a calculated horizontal tilt angle ($\varphi_G$) of the spectacle lens (12) based on the spectacle frame data, spectacle lens data and user data in the position of use at a reference point (B), or based on approximate values of the spectacle frame data, spectacle lens data and user data in the position of use at a reference point (B), wherein

the reference point (B) is the point of intersection of the horizontal principal ray on the eye side at zero viewing direction (NBR) of the user with the surface (14) of the spectacle lens (12) on the object side;
the horizontal tilt angle ($\varphi_G$) is the angle that is enclosed by a horizontal tangent (26) of the surface (14) of the spectacle lens (12) on the object side at the reference point (B) with a horizontal straight reference line (HR); and
the horizontal straight reference line (HR) lies in a plane that is perpendicular to the horizontal principal ray in the zero viewing direction (NBR) of the user.

**2.** Method according to claim 1 with the further steps:

• presetting the magnitudes of the optical defective vision of the user as further user data;
• defining the spectacle lens (12) working from the preset the spectacle frame data, spectacle lens data and user data taking into consideration the horizontal tilt angle ($\varphi_G$).

**3.** Method according to claim 2 with the further step:

• fabricating the defined spectacle lens (12).

**4.** Method according to claim 2 or 3 with the further step:

• defining a corrected pupil distance ($p'_L$, $p'_R$) working from the pupil distance ($p_L$, $p_R$) of the user taking into consideration the horizontal tilt angle ($\varphi_G$), wherein the corrected pupil distance ($p'_L$, $p'_R$) is usable for fitting the spectacle lens (12) into a spectacle frame (22).

**5.** Method according to claim 4 with the step:

• fitting the spectacle lens (12) into a spectacle frame (22) on the basis of the corrected pupil distance ($p'_L$, $p'_R$).

**6.** Device with

• a spectacle frame data acquisition unit that is designed for collecting a bridge width (b), a lens length (l) and a frame lens angle ($\varphi_F$) as spectacle frame data;
• a spectacle lens data acquisition unit that is designed for collecting a base curve (BK) as well as a nasal and temporal bevel position ($a_{Fn1}$ $a_{Ft}$) as spectacle lens data;
• a user data acquisition unit that is designed for collecting a pupil distance ($p_L$, $p_R$) of the user as user data;
• a tilt angle defining unit designed for calculating a horizontal tilt angle ($\varphi_G$) of the spectacle lens (12) based on the spectacle frame data, spectacle lens data and user data in the position of use at a reference point (B), and/or designed for taking a calculated horizontal tilt angle ($\varphi_G$) of the spectacle lens (12) based on the spectacle frame data, spectacle lens data and user data in the position of use at a reference point (B) and/or based on approximate values of the spectacle frame data, spectacle lens data and user data in the position of use at a reference point (B) from a data bank, wherein

the reference point (B) is the point of intersection of the horizontal principal ray on the eye side at zero viewing direction (NBR) of the user with the surface (14) of the spectacle lens (12) on the object side;

the horizontal tilt angle ($\varphi_G$) is the angle that is enclosed by a horizontal tangent (26) of the surface (14) of the spectacle lens (12) on the object side at the reference point (B) with a horizontal straight reference line (HR); and

the horizontal straight reference line (HR) lies in a plane that is perpendicular to the horizontal principal ray in the zero viewing direction (NBR) of the user.

**7.** Device according to claim 6 with

a spectacle lens defining unit designed for defining the spectacle lens (12) working from the preset the spectacle frame data, spectacle lens data and user data taking into consideration the horizontal tilt angle ($\varphi_G$), wherein

the spectacle lens defining unit is further designed to collect magnitudes of the optical defective vision of the user as further user data.

**8.** Device according to claim 7 with:

a spectacle glass fabrication unit designed to fabricate the defined spectacle glass (12).

**9.** Device according to claim 7 or 8 with

a pupil distance correction unit designed for defining a corrected pupil distance ($p'_L$, $p'_R$) working from the pupil distance ($p_L$, $p_R$) of the user taking into consideration the horizontal tilt angle ($\varphi_G$), wherein the corrected pupil distance ($p'_L$, $p'_R$) is usable for fitting the spectacle lens (12) into a spectacle frame (22).

**10.** Device according to claim 9 with

a spectacle lens fitting unit designed for fitting the spectacle lens (12) into a spectacle frame (22) on the basis of the corrected pupil distance ($p'_L$, $p'_R$).

**11.** Computer program product comprising program parts, which when loaded onto a computer are designed to conduct a method according to one of claims 1 to 5.

**Revendications**

**1.** Procédé comportant les étapes :

- définition d'une largeur (b) du passant du nez, d'une longueur (1) du verre de lunettes et d'un angle ($\varphi_F$) entre monture et verre, constituant les données de monture ;

- définition d'une courbe de base (BK), ainsi que d'une position nasale et temporale des facettes ($a_{Fn}$, $a_{Ft}$), constituant les données des verres de lunettes ;

- définition d'une distance entre pupilles ($P_L$, $P_R$) de l'utilisateur, constituant les données utilisateur ;

- calcul d'un angle de basculement horizontal ($\varphi_G$) du verre de lunette (12) basé sur les données de monture, les données des verres de lunettes et les données utilisateur, dans la position d'utilisation sur un point de référence (B), ou prélèvement d'un angle de basculement horizontal ($\varphi_G$) calculé du verre de lunettes (12) dans une base de données, basée sur les données de monture, les données des verres de lunettes et les données utilisateur, dans la position d'utilisation sur un point de référence (B), ou basée sur des valeurs d'approximation des données de monture, des données des verres de lunettes et des données utilisateur, dans la position d'utilisation sur un point de référence (B), dans lequel procédé

le point de référence (B) est le point d'intersection entre le rayon principal horizontal du côté oeil dans la position primaire du regard (NBR) de l'utilisateur, et la surface (14), du côté objet, du verre de lunettes (12) ;

l'angle de basculement horizontal ($\varphi_G$) est l'angle qui est formé entre une tangente horizontale (26) de la surface (14), du côté objet, du verre de lunettes (12) sur le point de référence (B) et une droite de référence horizontale (HR), et la droite de référence horizontale (HR) se situe dans un plan qui est perpendiculaire au rayon principal horizontal dans la position primaire du regard (NBR) de l'utilisateur.

**2.** Procédé selon la revendication 1, comportant les étapes supplémentaires :

- définition des valeurs du défaut de vision optique de l'utilisateur, en tant que données utilisateur supplémentaires ;

- détermination du verre de lunettes (12) à partir des données de monture, des données des verres de lunettes et des données utilisateur en tenant compte de l'angle de basculement horizontal ($\varphi_G$).

3. Procédé selon la revendication 2, comportant l'étape supplémentaire :

- fabrication du verre de lunettes (12) déterminé.

4. Procédé selon la revendication 2 ou 3, comportant l'étape supplémentaire :

- détermination d'une distance entre pupilles corrigée ($P'_L$, $P'_R$) à partir de la distance entre pupilles ($P_L$, $P_R$) de l'utilisateur, en tenant compte de l'angle de basculement horizontal ($\varphi_G$), sachant que la distance entre pupilles corrigée ($P'_L$, $P'_R$) peut être utilisée pour le montage du verre de lunettes (12) dans une monture de lunettes (22).

5. Procédé selon la revendication 4, comportant l'étape :

- montage du verre de lunettes (12) dans une monture de lunettes (22) à l'appui de la distance entre pupilles corrigée ($P'_L$, $P'_R$).

6. Dispositif, comportant :

- un dispositif d'enregistrement des données de monture, lequel est configuré pour enregistrer une largeur (b) du passant du nez, une longueur (1) du verre de lunettes et un angle ($\varphi_F$) entre monture et verre, constituant les données de monture ;
- un dispositif d'enregistrement des données du verre de lunettes, lequel est configuré pour enregistrer une courbe de base (BK), ainsi qu'une position nasale et temporale des facettes ($a_{Fn}$, $a_{Ft}$), constituant les données des verres de lunettes ;
- un dispositif d'enregistrement des données utilisateur, lequel est configuré pour enregistrer une distance entre pupilles ($P_L$, $P_R$) de l'utilisateur, constituant les données utilisateur ;
- un dispositif de détermination de l'angle de basculement, lequel est configuré pour calculer un angle de basculement horizontal ($\varphi_G$) du verre de lunettes (12) basé sur les données de monture, les données des verres de lunettes et les données utilisateur, dans la position d'utilisation sur un point de référence (B), et/ou lequel est configuré pour prélever dans une base de données un angle de basculement horizontal ($\varphi_G$) calculé du verre de lunettes (12) sur la base des données de monture, des données des verres de lunettes et des données utilisateur, dans la position d'utilisation sur un point de référence (B), ou sur la base de valeurs d'approximation des données de monture, des données des verres de lunettes et des données utilisateur, dans la position d'utilisation sur un point de référence (B), dans lequel dispositif

le point de référence (B) est le point d'intersection entre le rayon principal horizontal du côté oeil dans la position primaire du regard (NBR) de l'utilisateur, et la surface (14), du côté objet du verre de lunettes (12) ;
l'angle de basculement ($\varphi_G$) horizontal est l'angle qui est formé entre une tangente horizontale (26) de la surface (14), du côté objet du verre de lunettes (12) sur le point de référence (B) et une droite de référence horizontale (HR), et la droite de référence horizontale (HR) se situe dans un plan qui est perpendiculaire au rayon principal horizontal dans la position primaire du regard (NBR) de l'utilisateur.

7. Dispositif selon la revendication 6, comportant :

un dispositif de détermination du verre de lunettes, qui est configuré pour déterminer le verre de lunettes (12) à partir des données de monture, des données des verres de lunettes et des données utilisateur prédéfinies, en tenant compte de l'angle de basculement horizontal ($\varphi_G$), sachant que le dispositif d'enregistrement des données utilisateur est configuré, en outre, pour enregistrer des valeurs du défaut de vision optique de l'utilisateur, en tant que données utilisateur supplémentaires.

8. Dispositif selon la revendication 7, comportant :

un dispositif de fabrication du verre de lunettes, qui est configuré pour fabriquer le verre de lunettes (12) déterminé.

**9.** dispositif selon la revendication 7 ou 8, comportant :

un dispositif de correction de la distance entre pupilles, qui est configuré pour déterminer une distance entre pupilles corrigée ($P'_L$, $P'_R$) à partir de la distance entre pupilles ($P_L$, $P_R$) de l'utilisateur, en tenant compte de l'angle de basculement horizontal ($\varphi_G$), sachant que la distance entre pupilles corrigée ($P'_L$, $P'_R$) peut être utilisée pour le montage du verre de lunettes (12) dans une monture de lunettes (22).

**10.** Dispositif selon la revendication 9, comportant :

un dispositif de montage du verre de lunettes, qui est configuré pour monter le verre de lunettes (12) dans une monture de lunettes (22) à l'appui de la distance entre pupilles corrigée ($P'_L$, $P'_R$).

**11.** Produit de programme d'ordinateur, comportant des parties de programme qui, lorsqu'elles sont chargées dans un ordinateur, sont configurées pour la mise en oeuvre d'un procédé selon l'une quelconque des revendications 1 à 5.

# FIG 1

EP 1 815 290 B1

FIG 2

19

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003169397 A1

**In der Beschreibung aufgeführte Nicht-Patentliteratur**

- **Heinz Diepes ; Ralf Blendowske.** Optik und Technik der Brille. Verlag, 2002